# EUROPEAN PATENT SPECIFICATION

(11) **EP 1 193 107 B1**
(45) Date of publication and mention of the grant of the patent: **27.02.2008**
(21) Application number: 00921049.3
(22) Date of filing: 27.04.2000
(51) Int. Cl.: B60K 35/00, B60R 11/02, B60R 16/02, G06F 3/02, G09F 9/00, G11B 33/02

(54) **DISPLAY DEVICE**
ANZEIGEGERÄT
AFFICHEUR

(43) Date of publication of application: 03.04.2002
(73) Proprietor: MITSUBISHI DENKI KABUSHIKI KAISHA, Chiyoda-ku Tokyo 100-8310 (JP)
(72) Inventor: KITANO, Toyoaki, Chiyoda-ku, Tokyo 100-8310 (JP); IEDA, Masahiro, Chiyoda-ku, Tokyo 100-8310 (JP); KONO, Osamu, Chiyoda-ku, Tokyo 100-8310 (JP); OKADA, Shimon, Chiyoda-ku, Tokyo 100-8310 (JP); KASUGA, Kei, Chiyoda-ku, Tokyo 100-8310 (JP); KATO, Shinichi, Chiyoda-ku, Tokyo 100-8310 (JP)
(74) Representative: Pfenning, Meinig & Partner GbR
(86) International application number: PCT/JP2000/002758
(87) International publication number: WO 2001/083253

(56) References cited:
- WO-A-98/45769
- DE-A1- 19 824 420
- DE-U1- 9 409 709
- DE-U1- 29 815 705
- JP-A- 7 167 669
- JP-A- 48 041 687
- JP-U- 6 087 095
- US-A- 4 625 657
- US-A- 5 567 004
- PATENT ABSTRACTS OF JAPAN vol. 1995, no. 09, 31 October 1995 (1995-10-31) -& JP 07 160203 A (ALPINE ELECTRON INC), 23 June 1995 (1995-06-23)

## Description

### (Technical Field)

This invention relates to a display apparatus, particularly to a display apparatus for a mobile body, which is mounted on an automotive vehicle or the like, and is provided with a displaying means and an operating means for performing an operation of the displaying means, when the operation of the operating means is performed, the operating means can be projected such that it separates from the displaying means.

### (Background Art)

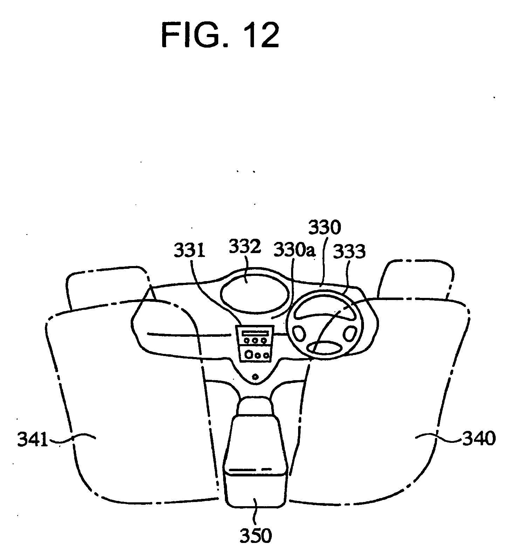

FIG. 12 is a schematic diagram showing a principal portion of an inside of a conventional automotive vehicle.

As shown in FIG. 12, in the conventional automotive vehicle, reference numeral 330 denotes an instrument panel provided in a front portion inside the automotive vehicle, reference numeral 331 denotes an audio system such as a radio receiver, a cassette deck player, a compact disc (CD) player or the like provided in a central portion 330a of the instrument panel 330, reference numeral 332 denotes a dash board provided in a central upper portion of the instrument panel 330, reference numeral 333 denotes a steering wheel provided on the right of the instrument panel 330, reference numeral 340 denotes a driver's seat, reference numeral 341 denotes an assistant driver' s seat, and reference numeral 350 denotes a central console box disposed in a position sandwiched between the driver's seat 340 and the assistant driver's seat 341.

Conventionally, it has been the dominant influence of the times to configure such that the audio system 331 is disposed in the central portion 330a of the instrument panel 330.

On the other hand, with the recent wide spreading of a navigation system, there have gradually been come into market of the automobile vehicle of the following arrangements, i.e., an arrangement in which a main body (not shown) of the navigation system is disposed under the front seat such as the driver's seat, the assistant driver's seat or the like so that a displaying portion for displaying thereon map information to be outputted from the navigation system is disposed near the central portion of the instrument panel; an arrangement in which the space for disposing an audio system is narrowed to dispose the displaying portion in an upper central portion of the instrument panel, i.e., to embed it inside the dash board; and an arrangement in which instruments indicating the state of a brake system which is disposed on the driver's seat side of the instrument panel, are disposed in the central portion of the instrument panel. This kind of arrangements will come to be the main current in the future.

In addition, arrangements considered disposition of the displaying portion, there have been known automobile vehicles of the following arrangements: i.e., an arrangement in which the displaying portion is disposed in the central upper portion of the instrument panel, i.e., is embedded inside the dash board; and an arrangement in which the displaying portion is embedded previously inside a part of a group of audio devices disposed in the central portion of the instrument panel, after the displaying portion is projected forward when it is in use, a display surface of the displaying portion moves substantially in parallel with the surface in the central portion of the instrument panel (in-dash type display apparatus).

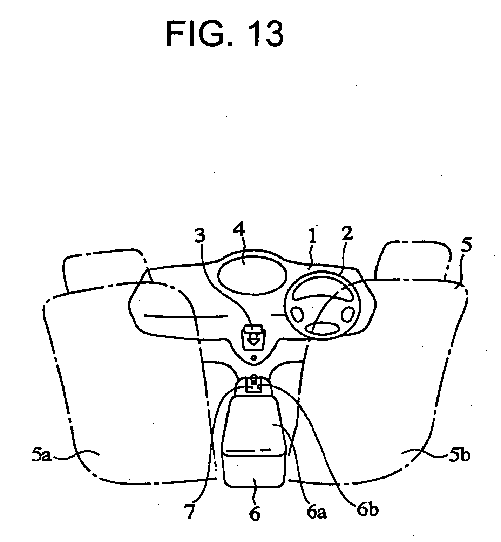

In this background, Japanese Patent Application Laid-open No. 297391/1998 discloses an arrangement in which switches for the audio devices, the air conditioner or the like which are conventionally disposed in the central portion of the instrument panel are provided inside a center console disposed between the driver's seat and the assistant driver's seat. FIG. 13 is a schematic diagram of a principal portion of the above arrangement.

In FIG. 13, reference numeral 1 denotes an instrument panel provided in a front portion inside the automobile vehicle, reference numeral 2 denotes a steering wheel provided on the right side of the instrument panel 1, reference numeral 3 denotes a gear shift lever provided in the central lower portion of the instrument panel 1, reference numeral 4 denotes a display provided in a central upper portion of the instrument panel 1, and reference numeral 5 denotes front seats, the front seats 5 being disposed by arranging an assistant driver's seat 5a and a driver's seat 5b in a line.

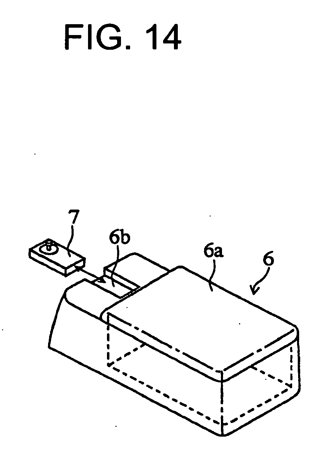

In addition, in a position sandwiched between the assistant driver's seat 5a and the driver's seat 5b, a center console 6 is provided. As shown in FIG. 14, the center console 6 is provided with a lid 6a and a housing portion is formed inside the center console 6 which is opened and closed by this lid 6a.

Further, in a part of the front of the center console 6, a switch disposing portion 6b which is formed in a recessed shape is provided. It is thus so arranged that a remote control unit 7 can be detachably mounted in this switch disposing portion 6b.

Having been arranged as described above, it allows a passenger seated in the driver's seat or in the assistant driver's seat of the automotive vehicle to be easily operated the switches in a seated posture.

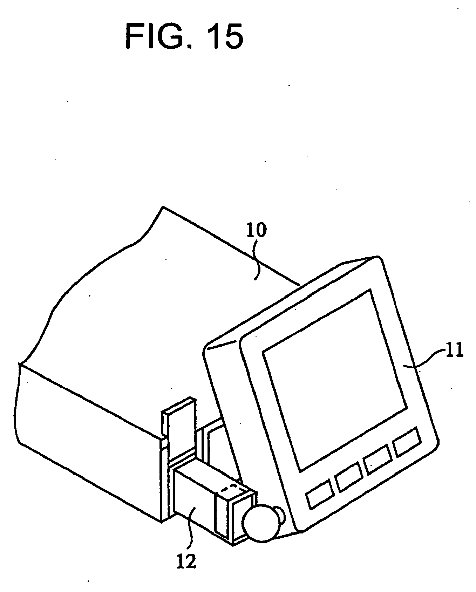

Further, Japanese Patent Application Laid-open No. 185547/1992 discloses a construction of a conventional improved model of an in-dash type of display apparatus. FIG. 15 is an overall arrangement view of this apparatus.

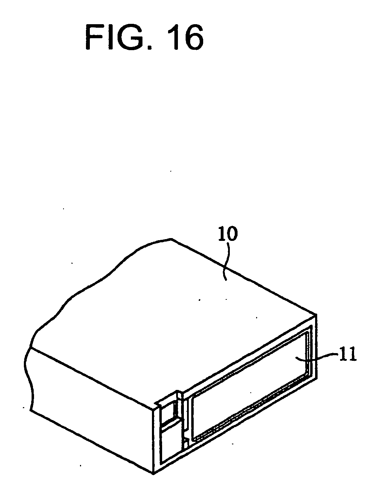

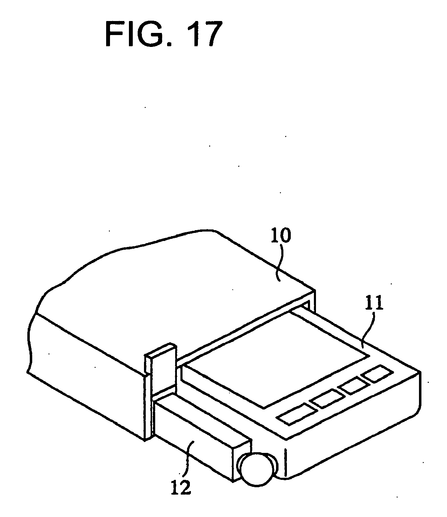

In addition, FIGS. 16 and 17 are figures explaining states of the operation this display apparatus. FIG. 16 shows a state in which the display is not in use and FIG. 17 shows a state in which the display is moving to the predetermined position so as to get into the state in FIG. 15 in which the display is in a position ready for use.

In FIGS. 15, 16 and 17, reference numeral 10 denotes a casing, reference numeral 11 denotes the display which is housed inside the casing 10 when it is not in use and which is taken out of the casing 10 when it is in use, and reference numeral 12 denotes a sliding member (arm) for supporting the display 11. This sliding member 12 is, when the display 11 is being housed, housed inside the casing 10 together with the display 11.

However the conventional audio devices and the image reproducing devices are arranged as described above and are mounted inside the automotive vehicle. There has been a problem that the space for disposition is limited in the central portion of the instrument panel, and that the devices to be installed in this space must therefore be deliberately selected by the user. Particularly, the user who wishes to equip various kinds of audio deices and image reproducing devices inside the automotive vehicle suffers from a serious inconvenience.

Further, the audio device is disposed in the central portion of the instrument panel. Therefore, there has been a problem that the replacement of the recording media such as cassette tapes, digital audio tapes (DAT's), compact discs (CD's), minidiscs (MD's), digital versatile discs (DVD's) or the like, or the simultaneous sitting operation of each device or that or a plurality of devices are only allowed for passengers seated in the front driver's seat and the assistant driver's seat. Therefore, there has a been a problem that passengers other than those seated in the front seats, i.e., the passengers seated in the rear seats are not allowed to perform the above works in a seated state, with the result that the passengers seated in the rear seats suffer from a serious inconvenience.

In addition, passengers are seated far from the displaying means. Therefore, there has been a problem that the disposition of the displaying means for displaying visual information from the image reproducing device or the like is disposed in the central portion of the instrument panel provides the passengers seated in the front seats a better visibility. However, it provides the passengers seated in the rear seats a poor visibility.

Further, when the audio device or the image reproducing device is operated, the operating means thereof is normally constituted integrally with the device. Therefore, there has been a problem that the operator is obliged to extend his or her arm toward the central portion of the instrument panel. It follows that the passengers seated in the rear seats cannot operate it, and even the passengers seated in the front seats must also change their posture from a posture leaning back in the seat to a posture forwardly bent in the seat before operating the device. Accordingly, the operation cannot easily be made.

An arrangement in which an operating means is separated as a remote controller (hereinafter refers as a remocon) from the apparatus itself is also known. In this kind of arrangement, after having operated with the remote controller, the remote controller is often left detached from the housing place. Ordinarily, the remote controller is small in size. Therefore, there has been a problem that it is apt to lose, and thus the operator gets into the trouble that he or she has to look for it before operating.

Further, the audio device, the image reproducing device or the like is disposed in the central portion of the instrument panel and fixed such that the connection of wires or the like is made inside the instrument panel, the number of devices disposable in the instrument panel having only a narrow space available is limited. Therefore, in disposing, a user is compelled to deliberately select the specific devices. In addition, there is a problem that, since the devices are fixed to part of the instrument panel by means of screws or the like, the replacing work of the device now mounted to a different device is cumbersome.

Further, when devices disposed in the apparatus are activated, anybody can operate them. Therefore, when children are present in the passengers, there is a problem that persons who are not welcome to operate the devices can also gain an easy access to their operation.

Further, when the devices disposed in the apparatus are detachable, anybody can detach them. Therefore, there is a problem that the devices mounted on the apparatus are subject to the damages of stealing, tampering or the like.

Further, the operating means such as a touch panel or the like for operating the displayed contents of the displaying means is disposed together with the displaying means in the central portion of the instrument panel. Therefore, there is a problem that, when the operating means is operated, the operator must change his or her posture from one leaning back to the seat to one forwardly bent in the seat before operating the operating means, or the operator is obliged to extend his or her arm to the operating means, with the result that the operation cannot easily be done.

Further, in case the space between the seats is devoted to a passage for the passengers like in a bus or the like, among the mobile bodies, there has been a problem that nothing can be disposed on the floor because of a possible hindrance to the passage of the passengers.

JP 06-087095 U shows a displaying means for displaying visual information, an operating means for outputting a predetermined signal based on an operation, and a supporting means for supporting the operating means. the operating means is set, at a time of non-operation, to a first position in which an operating surface faces a non-displaying surface of the displaying means, and is set, at a time of operation, by rotating to a second position in which an operation to the operating surface is permitted. The supporting means comprises an arm portion which is housed when the operating means is set to the first position, and is projected forward when the operating means is set to the second position.

Further, DE 94 09 709 U1 also discloses a display apparatus according to the preamble of claim 1, showing a displaying means for displaying visual information, an operating means for outputting a predetermined signal based on an operation, an a supporting mans for supporting the operating means. Here, too, the operating means is set, at a time of non-operation, to a first position in which an operating surface faces a displaying surface of the displaying means, and is set, at a time of operation, by rotating to a second position in which an operation to the operating surface is permitted.

The supporting means comprises a rotatable arm portion, with one end of which being rotatably fixed spaced apart from the displaying means and the other end of which rotatably supporting the operating means.

This invention has been made to solve the above described problems. An object of the invention is to provide a display apparatus for improving an operation of the displayed contents or the like of the displaying means in a posture leaning back in a seat, i.e., in a relaxedly seated posture, by providing a displaying means disposed in the central portion of the instrument panel with an operating means which projects rearward of the automotive vehicle compartment.

Another object of the invention is to provide a display apparatus for preventing the operating means from being lost, by arranging the displaying means and the operating means separable through a supporting means.

Another object of the invention is to provide a display apparatus for recognizing visual information, irrespective of a state of the operation of the operating device, by making a display only by the display surface displayable even when the operating means is overlapped with the displaying means.

Another object of the invention is to provide a display apparatus for recognizing all of the visual information to be displayed, irrespective of the size of the area of the display surface, by changing the ratio of scale of displayed contents depending on the area of the display surface as a result of overlapping of the operating means with the displaying means, so as to further improve the convenience of the apparatus.

Another object of the invention is to provide a display apparatus for recognizing the contents of the divided display, irrespective of the size of the area of the display surface, by arranging that, even if the area of the display surface of the displaying means is varied due to the overlapping of the operating means with the displaying means, the divided display can be made depending on each case, so as to improve the convenience of the apparatus.

Another object of the invention is to provide a display apparatus for adapting an operation to respective users, by setting the angle of the operating means relative to the displaying means depending on the preference of the user, so as to further improve the operability of the apparatus.

The above objects according to the invention are solved by a display apparatus comprising the features of claim 1 as well as preferred embodiments of this apparatus as defined in the subclaims.

### (Brief Description of Drawings)

FIG. 1 is a schematic diagram showing an overall arrangement of a display apparatus according to the first embodiment.

FIG. 2 is a schematic diagram showing a state of the operation moved from the state in FIG. 1.

FIG. 3 is a schematic diagram showing a state of the operation moved from the state in FIG. 1.

FIG. 4 is a schematic diagram showing a state of the operation moved from the state in FIG. 1.

FIG. 5 is a sectional view showing a section of a principal portion of the display apparatus according to the first embodiment.

FIG. 6 is a schematic diagram showing a state of the operation of a principal portion.

FIG. 7 is a schematic diagram showing a state of the operation of a principal portion.

FIG. 8 is a schematic diagram showing a principal portion of a rotary mechanism.

FIG. 9 is a schematic diagram showing a state of the operation of the rotary mechanism.

FIG. 10 is a schematic diagram showing an arrangement of a principal portion of the rotary mechanism.

FIG. 11 is a schematic diagram showing an operation of a principal portion of the display apparatus according to the first embodiment.

FIG. 12 is a detail view showing a principal portion of an inside of a conventional mobile body.

FIG. 13 is a detailed view of a principal portion of an inside of a conventional mobile body.

FIG. 14 is a schematic diagram showing an arrangement of a center console box provided inside a conventional mobile body.

FIG. 15 is a schematic diagram showing an arrangement of a prncipal portion of a display apparatus provided inside a conventional mobile body.

FIG. 16 is a schematic diagram showing a state of operation of the display apparatus provided inside the conventional mobile body.

FIG. 17 is a schematic diagram showing a state of operation of the display apparatus provided inside the conventional mobile body.

### (Best Mode for Carrying Out the Invention)

In order to describe this invention in more detail, best mode for carrying out this invention will now be described with reference to the accompanying drawings.

### First Embodiment

A description will be made about a display apparatus according to the first embodiment of this invention.

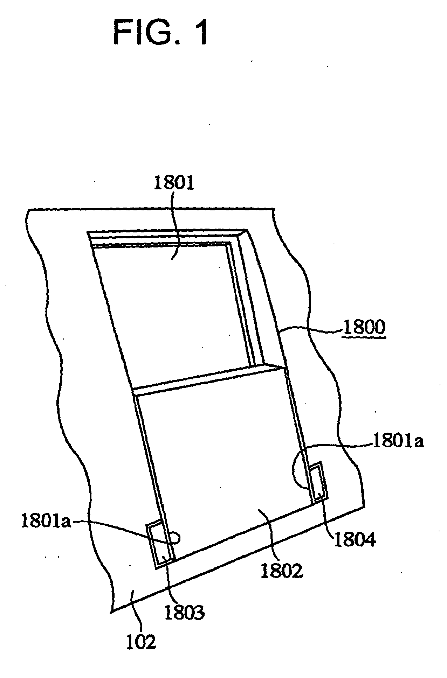

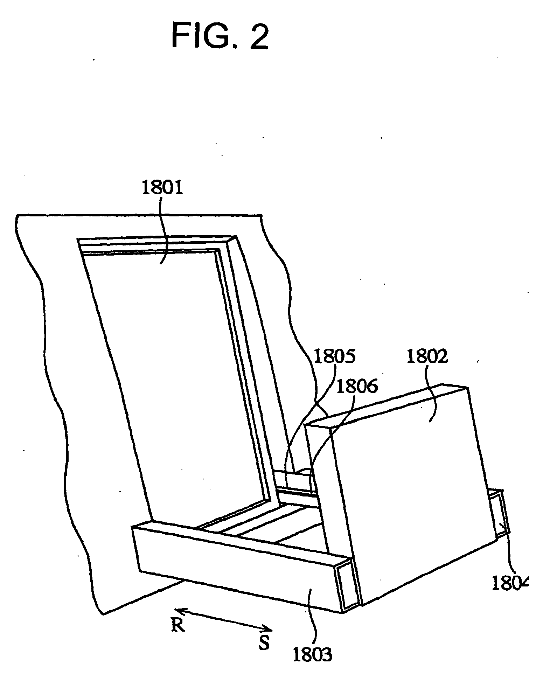

FIG. 1 is a schematic diagram showing an overall arrangement of a display apparatus according to the first embodiment, FIGS. 2, 3 and 4 are schematic diagrams showing a state of the operation moved from the state in FIG. 1.

In FIG. 1, reference numeral 1800 denotes a display apparatus provided in a central portion of an instrument panel 102. This display apparatus 1800 is constituted by: a displaying portion 1801 as a displaying means for displaying visual information; a supporting portion made up of a left side supporting portion 1803 and a right side supporting portion 1804, both serving as a supporting means for supporting an operating portion 1802 (to be described later) on both ends which correspond to lower peripheral portions 1801a of this displaying portion 1801 as viewed in FIG. 1; and the operating portion 1802 as an operating means for performing an operation of this display apparatus 1800. This operating portion 1802 is rotated on the supporting portion.

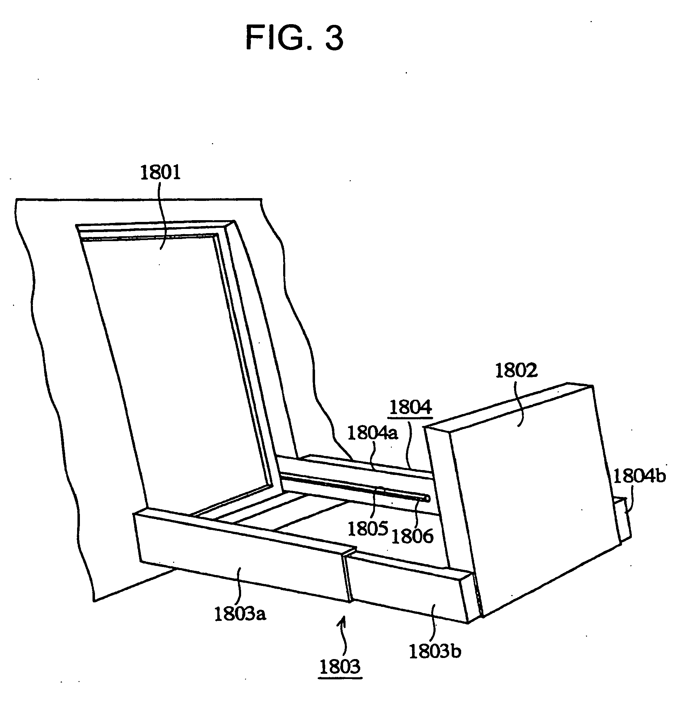

In addition, in FIGS. 2 and 3, the supporting portion constituted by the left side supporting portion 1803 and the right side supporting portion 1804 is formed by an arm portion. At the time of setting to a first position inwhich the operating portion 1802 is housed, the arm portion is housed and, at the time of setting to a second position, the arm portion which moves coupled with the operating portion so as to separate the displaying portion 1801 and the operating portion 1802 projects forward. The left side supporting portion 1803 is constituted by a first left arm portion 1803a and a second left arm portion 1803b which is housed inside the first left arm portion 1803a, both 1803a/1803b being defined as the arm portion. In addition, the right side supporting portion 1804 is constituted by a first right arm portion 1804a and a second right arm portion 1804b which is housed inside the first right arm portion 1804a, both 1804a/1804b being defined as the arm portion. The first left arm portion 1803a and the first right arm portion 1804a are housed inside the instrument panel. In other words, in case the operating portion 1802 is not in use, the left side supporting portion 1803 and the right side supporting portion 1804 are, as shown in FIG. 1, housed inside the instrument panel.

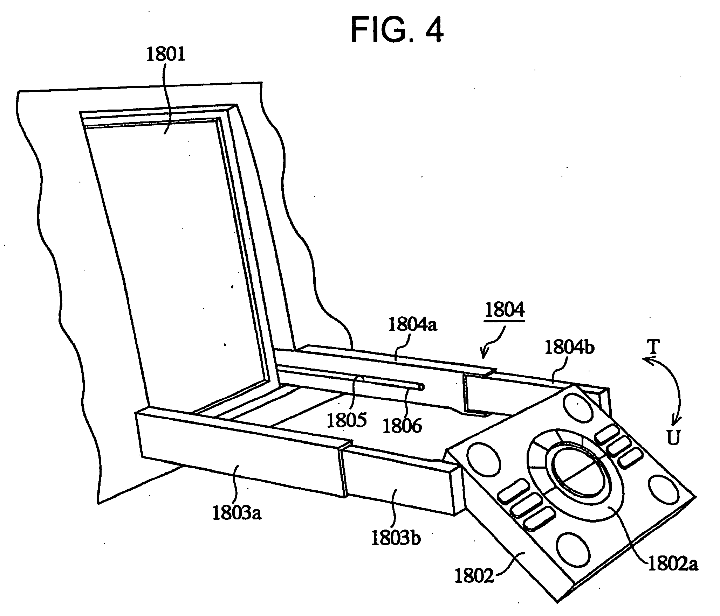

In a part of each of those surfaces of the first left arm portion 1803a and the first right arm portion 1804a which face each other, i.e., in a part of the left side surface of the first right arm portion 1804a, a slit-like groove portion 1805 is formed as shown in FIG. 4, and in a part of the right side surface of the first left arm portion 1803a, a groove portion 1805 is formed, which is similar to the groove portion 1805 formed in the first right arm portion 1804a.

Further, in a part of the left side surface of the second right arm portion 1804b, a projected portion 1806 is formed. This projected portion 1806 is fit into the groove portion 1805 formed in the first right arm portion 1804a. It is thus so arranged that the projected portion 1806 slidably moves inside the groove portion 1805 coupled with the movement of the second right arm portion 1804b. In addition, in a part of the right side surface of the second left arm portion 1803b, a projected portion 1806 is formed, which is similar to the projected portion 1806 formed in the second right arm portion 1804b. This projected portion 1806 is fit into the groove portion 1805 formed in the first left arm portion 1803a. It is thus so arranged that the projected portion 1806 slidably moves along the groove portion 1805 coupled with the movement of the second left arm portion 1803b.

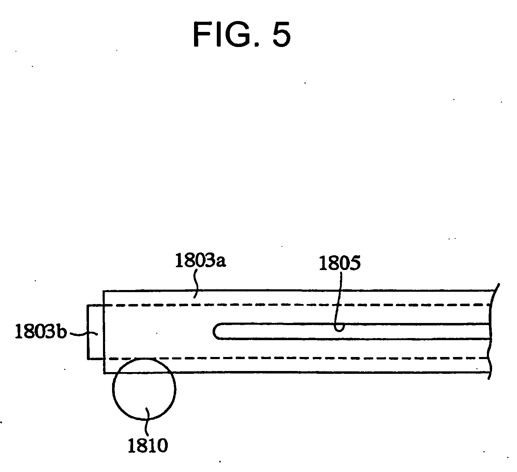

Next, with reference to FIGS. 5 through 7, the mechanism for performing the operation of projecting the operating portion 1802 toward this side from the displaying portion 1801 will now be described.

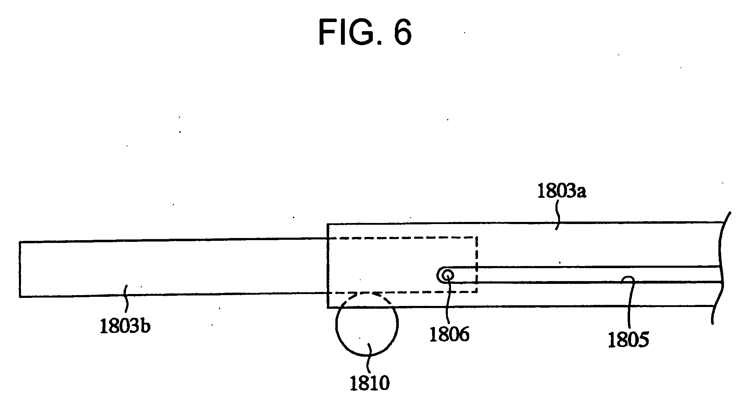

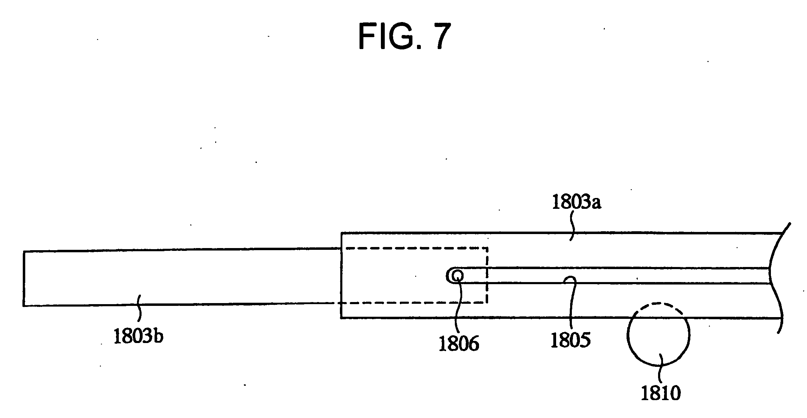

FIG. 5 is a sectional view showing a section in the longitudinal direction of the left side supporting portion 1803. FIGS. 6 and 7 show the state in which the first left arm portion 1803a and the second left arm portion 1803b project in the left direction as viewed in the figures, i.e., extend in the left direction, from the state shown in FIG. 5 to the state shown in FIG. 3.

In FIG. 5, reference numeral 1810 denotes a roller portion provided inside the display apparatus. A contact surface of this roller portion 1810 comes into contact with the lower surfaces of the first left arm portion 1803a and the second arm portion 1803b.

Having been arranged as described above, once a user gives a pulling force to the operating portion 1802 so as to pull it out, the roller portion 1810 rotates in the counterclockwise direction. As a result, first, it gets into the state in which the second left arm portion 1803b extends in the direction S as shown in FIG. 2, i.e., in the extending direction toward this side. At this time, although the state is as shown in FIG. 6, from the viewpoint of the relationship between the groove portion 1805 and the projected portion 1806, the projected portion 1806 formed on the right side of the second left arm portion 1803b slides, coupled with the movement of the second left arm portion 1803b, inside the groove portion 1805 formed in the right side surface of the first left side arm portion 1803a. The projected portion 1806 moves to the left end portion of the groove portion 1805, with the result that it gets in a state in which the projected portion 1806 is in contact with the left end portion of the groove portion 1805.

Further, with the help of the pulling out force of the operating portion 1802, the first left arm portion 1803a is moved, with the projected portion 1806 serving as a supporting point, from a state of contact with the left end portion of the groove portion 1805 in the direction S as shown in FIG. 2 to the state as shown in FIG. 7. The display apparatus as a whole will get into the state as shown in FIG. 3.

Next, a description will be made about a mechanism which performs the rotating operation of the operating portion 1802 to enable an operating surface 1802a to face toward the operator so as to operate the operating portion 1802.

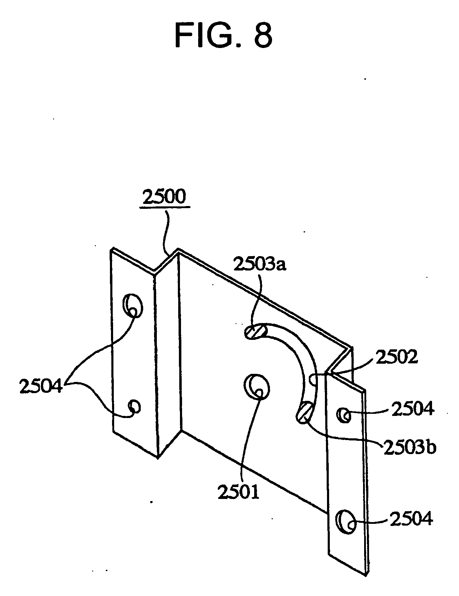

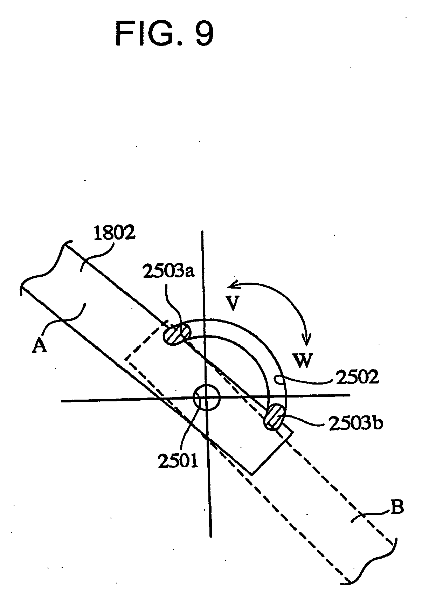

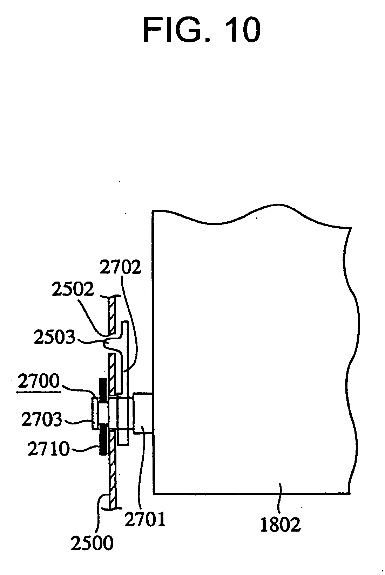

FIG. 8 is a schematic diagram showing an principal portion of a rotary mechanism, FIG. 9 is a schematic diagram showing a state of the operation of the rotary mechanism, and FIG. 10 is a schematic diagram showing an arrangement of an principal portion of the rotary mechanism.

In FIG. 8, reference numeral 2500 denotes a rotation restricting plate portion for restricting the rotary motion of the operating portion 1802. This rotation restricting plate portion 2500 is constituted by: a fitting hole 2501 which supports, with fitting thereinto, a front end portion of a shaft portion 2701 which is integrally formed in a part of each end surface of the operating portion 1802 as shown in FIG. 10; a groove portion 2502 which is formed into an arcuate shape; and screw holes 2504 for mounting by screws or the like on a front end of this side of the right side surface of the second left arm portion 1803b and on a front end of this side of the left side surface of the second right arm portion 1804b.

In addition, in FIG. 10, reference numeral 2700 denotes an element constituting a rotary shaft of the operating portion 1802 which is formed integrally with a part of each end surface of the operating portion 1802. This rotary shaft 2700 has also integrally formed with a plate portion 2702 which is formed into a disk shape and forms a projected portion 2503 in part thereof. The projected portion 2503 is fit into the fitting hole 2501 in the rotation restricting plate portion 2500, and a member 2710 to prevent the rotation restricting plate portion 2500 from being pulled out is mounted on the rotary shaft 2700 near a front end portion 2703 thereof.

Here, FIG. 8 shows a state in which the projected portion 2503 is fit into the groove portion 2502. Reference numeral 2503a denotes a position of the projected portion 2503 in which, as shown in FIGS. 1, 2 and 3, the operating portion 1802 is folded, i.e., is closed. Reference numeral 2503b, on the other hand, shows a position of the projected portion 2503 in which, as shown in FIG. 4, the operating portion 1802 is opened. In this manner, it is so arranged that the rotary movement is restricted by the contact of the projected portion 2503 with the end portions of the groove portion 2502.

Further, as to these operations, as shown in FIG. 9, "A" denotes a state in which the operating portion 1802 is closed. The projected portion 2503 in this state is in the position of 2503a. "B" shown in dotted lines denotes a position in which the operating portion 1802 is opened. The projected portion 2503 in this state is in the position of 2503b.

Then, a description will be made about the rotary movement of the operating portion 1802.

First, at the time of non-operation, i.e., in a state in which no operation is made, the operating surface 1802a of the operating portion 1802 is set, as shown in FIG. 1, in a first position facing the display surface of the displaying portion 1801. on the other hand, at the time of operation, i.e., when an operation is made, after the operating portion 1802 is pulled out of the first position shown in FIG. 1, the operating portion 1802 rotates in the direction U as shown in FIG. 4, thereby setting the operating portion 1802 in a second position in which the operation of the operating surface 1802a of the operating portion 1802 is possible.

Here, a description will be made about a series of movements to change from the state in which the operating portion 1802 is wholly housed in the display apparatus as shown in FIG. 1, to the state in which the operating portion 1802 is completely separated from the display apparatus as shown in FIG. 4, thereby enabling an operation of the operating surface 1802a.

In the state shown in FIG. 1, the user pulls out the operating portion 1802 and, after having pulled out the operating portion 1802 to the predetermined position through the positions shown FIGS. 2 and 3, the operating portion 1802 rotates in the direction U as shown in FIG. 4, thereby appearing the operating surface 1802a in the vehicle compartment.

On the contrary, when the operating portion 1802 is housed face to face with the displaying portion from the state shown in FIG. 4, the operations are made in the reverse direction of those as described above.

Therefore, as described above, since the apparatus is constituted, together with the displaying portion and the operating portion, by the supporting means which supports the operating portion and which is retractable, and the rotary mechanism which rotates the operating portion. This enables an operation of the operating portion in a position favorite to the user. In other words, the operation can be made in a comfortable posture while the user remains seated, resulting in an improvement in the convenience.

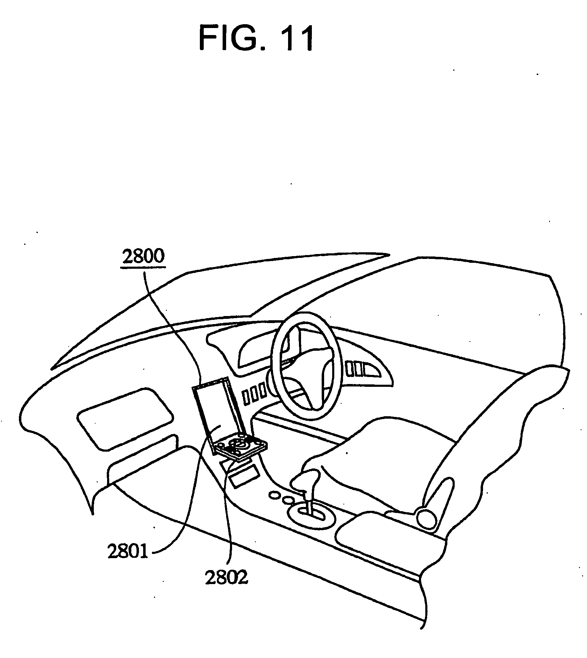

FIG. 11 shows a state in which only the operating portion 2802 rotates to get into an operable state without pulling out the supporting portion. In this manner, depending on how the user uses, it may be performed only the rotary operation of the operating portion 2802 without projecting the supporting portion.

### Second Embodiment

A description will be made about a display apparatus according to the second embodiment of this invention.

In the above first embodiment, it lacks a description that display on the display surface in a state in which the operating surface 1802a of the operating portion 1802 is folded onto the displaying portion 1801 so that the display surface and the operating surface are overlapped with each other. In this second embodiment, the displaying is possible on a surface onto which the operating surface 1802a is not overlapped. Therefore, when the operating portion 1802 is set to the first position which is the housed position, it may be made a display only on the display surface not overlapped with the operating surface 1802. In other words, visual information such as map information or the like which is outputted by a navigation apparatus (not shown) or visual information which is outputted by an audio device, an image reproducing device or the like is displayed only on the display surface which is not overlapped with the operating portion 1802.

Having been constituted as described above, the displaceable portion can be effectively utilized and the convenience of the user is improved.

### Third Embodiment

A description will be made about a display apparatus according to the third embodiment of this invention.

In the second embodiment as described above, the display surface of the displaying portion 1801 which is not overlapped with the operating portion 1802 is displaceable. Alternatively, it may be changed the displaying scale based on the size of the displaceable display surface of the displaying portion 1801.

Namely, the area of the display surface has a ratio of approximately 1:2 between a state in which the operating portion 1802 is housed and that in which it is not. Therefore, there has been a problem that despite an attempt to display the same displayed contents on the displaying portion 1801 under any circumstances, the visual information, if based on the same displaying scale, will be 1/2 in case the operating portion 1802 is housed as compared with the case in which it is not. To solve this kind of problem, the displaying scale is changed depending on the area of the display surface in order to display the same contents of visual information. For example, in case the size of the display surface of the displaying portion 1801 is 1:2, the scale ratio of the contents is changed to 1/2:1. By this arrangement, when the area of the display surface of the displaying portion 1801 is small, although the image becomes slightly difficult to see as compared with the case where the area of the display surface is large, an effect can be obtained that it is possible to see the same displayed contents.

Accordingly, having been arranged as described above, when a user wishes to see the contents displayed on the displaying portion 1801 in detail where the operating portion 1802 is housed, the operating portion 1802 gets ready for operation. When a user does not wish to see the contents in detail, the operating portion 1802 may be housed, so that the displayed contents are changed into the small-scale. In this manner, the convenience of the apparatus can be further improved without missing the contents.

### Fourth Embodiment

A description will be made about a display apparatus according to the fourth embodiment of this invention.

The displaying portion 1801 shown in FIG. 1 enables a divided display in which a plurality of screens are displayed. In case the divided display is made when the displaying portion 1802 is set to the first position which is the housed position as shown in FIG. 1, the divided display may be made only on the display surface which is not overlapped with the operating surface 1802. In case the divided display is made when the operating portion 1802 is set to the second position in which the operation of the operating portion 1802 is possible, the divided display may be made on the entire display surface of the displaying portion 1801. By arranging in this manner, based on the position of the operating portion 1802, the display surface of the displaying portion 1801 can be effectively utilized, with the result that the convenience of the apparatus is improved.

### Fifth Embodiment

A description will be made about a display apparatus according to the fifth embodiment of this invention.

As shown in FIG. 4, when the operating portion 1802 is in the second position in which the operation thereof is possible, it may be arranged such that the operating surface 1802a of the operating portion 1802 forms an obtuse angle relative to the display surface of the displaying portion 1801. Having been arranged as described above, since the operating surface of the operating portion 1802 is set to a position easily accessible to the field of view of the user, the visibility of the operating surface and the operability are improved.

### Sixth Embodiment

A description will be made about a display apparatus according to the sixth embodiment of this invention.

In the above fifth embodiment, in the second position of the operating portion 1802 in which the operation thereof is possible, the operating surface 1802a of the operating portion 1802 forms an obtuse angle relative to the display surface of the displaying portion 1801. It may be provided an angle adjusting means (not shown) for adjusting the angle formed between the operating surface of the operating portion 1802 and the display surface of the displaying portion 1801 in order to adjust an inclination of the operating portion 1802 to optimum to the user.

Having been arranged as described above, setting of the operating portion 1802 according to his or her own body further improves the visibility and the operability.

### Seventh Embodiment

A description will be made about a display apparatus according to the seventh embodiment of this invention.

In the above first embodiment, when the operating portion 1802 is pulled out, the user himself pulls it out. Alternatively, it may be provided a driving motor inside the display apparatus to constitute a driving mechanism for transmitting the driving force of this driving motor to the roller portion 1810 shown in FIG. 5. Further, a switch may be provided in a part of the display apparatus so that the driving motor can be driven by the operation of this switch.

Having been arranged as described above, the operating portion 1802 can be automatically pulled out or housed only by the operation of the switch. This eliminates this kind of troublesome operations, resulting in a further improvement in the convenience of the user.

## Claims

1. A display apparatus (1800) comprising:
a displaying means (1801) for displaying visual information immoveably provideable in a panel (102) ;
an operating means (1802) for outputting the predetermined signal based on an operation; and
a supporting means (1803, 1804) for supporting said operating means (1802), said supporting means (1803, 1804) being provided near a peripheral portion of said displaying means (1801), said operating means (1802) being rotatable on said supporting means (1803, 1804), wherein said operating means (1802) is set, at a time of non-operation, to a first position in which an operating surface faces a display surface of said displaying means (1801), and set, at a time of operation, to a second position in which, rotating from said first position, an operation to said operating surface is permitted,
**characterized in that**
said supporting means (1803, 1804) comprises an arm portion (1803, 1804), said arm portion (1803, 1804) being houseable in said panel (102) when said operating means (1802) is set to said first position, and being projected forward when said operating means (1802) is set to said second position so as to separate said displaying means (1801) from said operating means (1802), wherein said arm portion (1803, 1804) is constituted by a first arm portion (1803a, 1804a) and a second arm portion (1803b, 1804b) which is slidably housed in said first arm portion (1803a, 1804a), and wherein said operating means (1802) is coupled to said second arm portion (1803b, 1804b).

2. The display apparatus as claimed in claim 1, wherein, when said operating means (1802) is set to said first position, said displaying means (1801) makes a display only on a display surface which is free from overlapping with said operating means (1802).

3. The display apparatus as claimed in claim 2, wherein said displaying means (1801) changes a displaying scale depending on a size of the display surface available for displaying.

4. The display apparatus as claimed in claim 1, wherein said displaying means (1801) displays the visual information in a plurality of screens, and wherein, in case it is to make a divided display when said operating means (1802) is set to said first position, the divided display is made only on the display surface free from overlapping with said operating means (1802), and wherein, in case it is to make a divided display when said operating means (1802) is set to said second position, the divided display is made on all of the display surface.

5. The display apparatus as claimed in claim 1, wherein said second position is a position in which the operating surface of said operating means (1802) forms an obtuse angle relative to the display surface of said displaying means (1801).

6. The display apparatus as claimed in claim 1, further comprising an angle adjusting means for adjusting an angle to be formed between the operating surface of said operating means (1802) and the display surface of said displaying means (1801).

## Patentansprüche

1. Eine Anzeigevorrichtung (1800), umfassend:
ein Anzeigemittel (1801) zum Anzeigen visueller Information, welches unbeweglich in einer Konsole (102) zur Verfügung stellbar ist;
ein Bedienmittel (1802) zum Ausgeben des vorbestimmten Signals basierend auf einer Bedienung; und
ein Aufnahmemittel (1803, 1804) zum Aufnehmen des besagten Bedienmittels (1802), wobei besagtes Aufnahmemittel (1803, 1804) nahe eines dezentralen Abschnitts des besagten Anzeigemittels (1801) zur Verfügung gestellt ist, wobei besagtes Bedienmittel (1802) auf besagtem Aufnahmemittel (1803, 1804) rotierbar ist, worin besagtes Bedienmittel (1802) in einem Nicht-Betriebszustand in einer ersten Position, in welcher eine Bedienoberfläche einer Anzeigeoberfläche des besagten Anzeigemittels (1801) gegenüberliegt, angeordnet ist und in einem Betriebszustand in einer zweiten Position angeordnet ist, in welcher, aus dieser ersten Position rotierend, eine Bedienung dieser Bedienoberfläche ermöglicht ist,
**dadurch gekennzeichnet,**
**dass** besagtes Aufnahmemittel (1803, 1804) einen Armabschnitt (1803, 1804) umfasst, wobei besagter Armabschnitt (1803, 1804) in besagter Konsole (102) aufnehmbar ist, wenn besagtes Bedienmittel (1802) in besagter erster Position angeordnet ist, und hervorstehend ist, wenn besagtes Bedienmittel (1802) in besagter zweiter Position angeordnet ist, um besagtes Anzeigemittel (1801) von besagtem Bedienmittel (1802) zu trennen, worin besagter Armabschnitt (1803, 1804) durch einen ersten Armabschnitt (1803a, 1804a) und einen zweiten Armabschnitt (1803b, 1804b), welcher verschiebbar in besagtem ersten Armabschnitt (1803a, 1804a) untergebracht ist, gebildet ist, und worin besagtes Bedienmittel (1802) mit besagtem zweiten Armabschnitt (1803b, 1804b) gekoppelt ist.

2. Die Anzeigevorrichtung wie in Anspruch 1 beansprucht, worin, wenn besagtes Bedienmittel (1802) in besagter erster Position angeordnet ist, besagtes Anzeigemittel (1801) eine Anzeige lediglich auf einer Anzeigeoberfläche ausführt, welche mit besagtem Bedienmittel (1802) nicht überlappt.

3. Die Anzeigevorrichtung wie in Anspruch 2 beansprucht, worin besagtes Anzeigemittel (1801) einen Anzeigemaßstab abhängig von einer Größe der Anzeigeoberfläche, welche zur Anzeige verfügbar ist, ändert.

4. Die Anzeigevorrichtung wie in Anspruch 1 beansprucht, worin besagtes Anzeigemittel (1801) die visuelle Information auf einer Mehrzahl von Schirmen anzeigt und worin, im Falle, dass es eine geteilte Anzeige realisiert, wenn besagtes Bedienmittel (1802) in besagter erster Position angeordnet ist, die geteilte Anzeige lediglich auf der Anzeigeoberfläche, welche frei von Überlappungen mit besagtem Bedienmittel (1802) ist, realisiert ist, und worin, im Falle, dass es eine geteilte Anzeige realisiert, wenn besagtes Bedienmittel (1802) in besagter zweiter Position angeordnet ist, die geteilte Anzeige auf der gesamten Anzeigeoberfläche realisiert ist.

5. Die Anzeigevorrichtung wie in Anspruch 1 beansprucht, worin besagte zweite Position eine Position ist, in welcher die Bedienoberfläche besagten Bedienmittels (1802) einen stumpfen Winkel relativ zu der Anzeigeoberfläche besagten Anzeigemittels (1801) ausformt.

6. Die Anzeigevorrichtung wie in Anspruch 1 beansprucht, darüberhinaus aufweisend ein Winkeleinjustiermittel zum Einjustieren eines Winkels, welcher zwischen der Bedienoberfläche besagten Bedienmittels (1802) und der Anzeigeoberfläche besagten Anzeigemittels (1801) auszuformen ist.

## Revendications

1. Appareil d'affichage (1800) comprenant :
des moyens d'affichage (1801) pour afficher des informations visuelles, pouvant être fournis de manière fixe dans un panneau (102);
des moyens d'actionnement (1802) pour délivrer en sortie le signal prédéterminé sur la base d'une opération; et
des moyens de support (1803, 1804) pour supporter lesdits moyens d'actionnement (1802), lesdits moyens de support (1803, 1804) étant fournis à proximité d'une partie périphérique desdits moyens d'affichage (1801), lesdits moyens d'actionnement (1802) pouvant tourner sur lesdits moyens de support (1803, 1804), dans lequel lesdits moyens d'actionnement (1802) sont placés, au moment où aucune opération n'est exécutée, dans une première position dans laquelle une surface de fonctionnement fait face à une surface d'affichage desdits moyens d'affichage (1801), et sont placés, au moment d'une opération, dans une seconde position dans laquelle, en tournant à partir de ladite première position, une opération vers ladite surface de fonctionnement est permise,
**caractérisé en ce que**
lesdits moyens de support (1803, 1804) comprennent une partie de bras (1803, 1804), ladite partie de bras (1803, 1804) pouvant être logée dans ledit panneau (102) lorsque lesdits moyens d'actionnement (1802) sont placés dans ladite première position, et faisant saillie lorsque lesdits moyens d'actionnement (1802) sont placés dans ladite seconde position afin de séparer lesdits moyens d'affichage (1801) desdits moyens d'actionnement (1802), dans lequel ladite partie de bras (1803, 1804) est constituée par une première partie de bras (1803a, 1804a) et une seconde partie de bras (1803b, 1804b) qui est logée de façon coulissante dans ladite première partie de bras (1803a, 1804a), et dans lequel lesdits moyens d'actionnement (1802) sont couplés à ladite seconde partie de bras (1803b, 1804b).

2. Appareil d'affichage selon la revendication 1, dans lequel, lorsque lesdits moyens d'actionnement (1802) sont placés dans ladite première position, lesdits moyens d'affichage (1801) procèdent à un affichage seulement sur une surface d'affichage qui est exempte de chevauchement avec lesdits moyens d'actionnement (1802).

3. Appareil d'affichage selon la revendication 2, dans lequel lesdits moyens d'affichage (1801) modifient une échelle d'affichage en fonction de la taille de la surface d'affichage disponible pour un affichage.

4. Appareil d'affichage selon la revendication 1, dans lequel lesdits moyens d'affichage (1801) affichent les informations visuelles dans une pluralité d'écrans, et dans lequel, dans le cas où il doit procéder à un affichage divisé lorsque lesdits moyens d'actionnement (1802) sont placés dans ladite première position, l'affichage divisé est réalisé seulement sur la surface d'affichage exempte de chevauchement avec lesdits moyens d'actionnement (1802), et dans lequel, dans le cas où il doit procéder à un affichage divisé lorsque lesdits moyens d'actionnement (1802) sont placés dans ladite seconde position, l'affichage divisé est réalisé sur toute la surface d'affichage.

5. Appareil d'affichage selon la revendication 1, dans lequel ladite seconde position est une position dans laquelle la surface d'actionnement desdits moyens d'actionnement (1802) forme un angle obtus par rapport à la surface d'affichage desdits moyens d'affichage (1801).

6. Appareil d'affichage selon la revendication 1, comprenant de plus des moyens de réglage d'angle pour régler un angle qui doit être formé entre la surface d'actionnement desdits moyens d'actionnement (1802) et la surface d'affichage desdits moyens d'affichage (1801).
